# EUROPÄISCHE PATENTSCHRIFT

(11) **EP 0 590 684 B1**
(45) Veröffentlichungstag und Bekanntmachung des Hinweises auf die Patenterteilung: **29.01.1997**
(21) Anmeldenummer: 93115923.0
(22) Anmeldetag: 01.10.1993
(51) Int. Cl.: B32B 27/30, B32B 27/08, B32B 31/00, B60J 1/18, B60J 7/12

(54) **Verfahren zum Herstellen einer flexiblen und kratzfesten Sichtscheibe für Cabriolets**
Process for manufacturing a flexible, scratch-resistant window for cabriolets
Procédé pour la fabrication d'une vitre flexible résistante à l'abrasion pour véhicules cabriolets

(30) Priorität: 02.10.1992 DE 4233275
(43) Veröffentlichungstag der Anmeldung: 06.04.1994
(73) Patentinhaber: Bayerische Motoren Werke Aktiengesellschaft, 80788 München (DE); BRAAS GmbH, D-61437 Oberursel (DE)
(72) Erfinder: Madlener, Roland, D-85748 Garching (DE); Schaumburg, Olaf, Dr., D-68782 Brühl (DE); Schmarbeck, Artur, D-67059 Ludwigshafen (DE)
(74) Vertreter: Dexheimer, Rolf

(56) Entgegenhaltungen:
- EP-A- 0 267 376
- FR-A- 2 366 922
- GB-A- 990 123

## Beschreibung

Die Erfindung bezieht sich auf ein Verfahren zum Herstellen einer flexiblen und kratzfesten Sichtscheibe für Cabriolets nach dem Oberbegriff des Patentanspruchs 1.

Bei einem bekannten derartigen Verfahren (EP-B-0 267 376) wird - neben anderen Applikationsmethoden - auch eine Methode offenbart, bei der die beiden Oberflächen der Sichtscheibe aus Weich-PVC entweder zugleich oder nacheinander mit einem 2K-Klarlack versehen und die so beschichtete Folie dann in eine vorgewärmte, hochglanzpolierte Form eingelegt und schließlich mit einem Preßdruck von etwa 40 bar beaufschlagt wird. Bringt man die thermisch aushärtenden Lackschichten gleichzeitig auf, so ist eine derart beidseitig beschichtete Folie bis zum Aushärten der Lackschichten im Fertigungsablauf äußerst schwierig zu handhaben. Trägt man die Lackschichten nacheinander auf die Kernfolie auf, ist dies zeitaufwendig und teuer, weil die zweite Beschichtung erst dann aufgetragen werden kann, wenn die erste Beschichtung genügend ausgehärtet ist. Dabei muß ferner das Handhaben der mit dem noch weichen Klarlack versehenen PVC-Folie jeweils mit äußerster Sorgfalt, in der Regel in einem sogenannten Reinraum, erfolgen, da sonst die Gefahr der Aufnahme von Staubpartikeln besteht, was wiederum die optische Qualität der Sichtscheibe verschlechtert. Will man einen guten Verlauf der aufgespritzten Klarlack-Schicht erreichen, so muß der Lack dünnflüssig, das heißt mit einem hohen Lösungsmittelanteil, verarbeitet werden, was hinsichtlich Umweltschutz und Arbeitsschutz größere Aufwendungen erfordert.

Der Erfindung liegt die Aufgabe zugrunde, ein Verfahren zum Herstellen einer flexiblen und kratzfesten Sichtscheibe für Cabriolets zu schaffen, das mit verhältnismäßig geringem Aufwand zu einer beidseitig mit hochelastischem Material beschichteten Kernfolie führt, die optisch sehr gute Eigenschaften hat.

Diese Aufgabe wird bei einem Verfahren der vorausgesetzten Gattung durch die im Kennzeichen des Patentanspruches 1 angegebenen Maßnahmen gelöst.

Das neue Verfahren gestattet es, als Ausgangsmaterial für die Kernfolie vor den erfindungsgemäßen Arbeitsgängen eine Kunststoff-Folie, beispielsweise eine Weich-PVC-Folie, zu verwenden, die in der Qualität ihrer Oberfläche - im Gegensatz zu den bisher bekannten Verfahren - noch nicht den höchsten Ansprüchen gerecht werden muß. Es kann eine Kalanderfolie verwendet werden, bei der die letzten Preßvorgänge zur größtmöglichen Glättung der beiden Oberflächen noch nicht durchgeführt worden sind. Eine solche gelegentlich auch als Vorfolie bezeichnete Folie ist wegen der letzten noch nicht durchgeführten Glättvorgänge vergleichsweise billig in ihrer Herstellung. Das Aufdoppeln (Doublieren) von Vorfolien zu den fertigen Folien in der letztlich gewünschten Materialdicke ist an sich bekannt. Das wesentlich Neue an dem erfindungsgemäßen Verfahren liegt aber daran, daß die mindestens zwei Kalanderfolien vor dem Doublieren auf den einander abgewandten Seiten mit einem hochelastischen Lack mit selbstheilenden Eigenschaften versehen worden sind. Preßt man dann diese beiden Folien mittels der polierten und beheizten Anpreßflächen, gegebenfalls zwei ebenen Platten, gegeneinander, so läßt sich mit lediglich diesem Arbeitsgang ein Schichtenverbund herstellen, der optisch sehr hohen Ansprüchen genügt. Eventuelle Unebenheiten und dadurch bedingte Trübungen in der Kalanderfolie sind, wenn die Verfahrensparameter richtig gewählt waren, am Endprodukt nicht mehr zu erkennen. Orangenhauteffekte und Pickel sowohl der Kalanderfolien bzw. der Vorfolien als auch der hochelastischen Außenschichten sind nahezu vollkommen beseitigt und damit ist eine sehr gute Transparenz gewährleistet, desgleichen eine gute thermische Vernetzung des kratzfesten Lackes mit den selbstheilenden Eigenschaften und ein dauerhafter Verbund zwischen den einzelnen Schichten der fertigen flexiblen Sichtscheibe. Die beiden Deckschichten stellen darüber hinaus eine gute Sperre gegen das Austreten von Weichmachern der Weich-PVC-Schicht dar.

Vor dem Verpressen und Glätten des eben erläuterten Mehrschicht-Verbundes werden die noch geringe Lösungsmittelanteile enthaltenden Deckschichten abgelüftet oder es werden die Deckschichten gleich lösungsmittelfrei oder -arm aufgetragen. Eine Beschichtungsmethode, bei der zum einen eine sehr gleichmäßige Beschichtung erreicht wird, zum anderen aber auch verhältnismäßig wenig Lösungsmittel benötigt werden, bietet das Siebdruckverfahren.

Die bevorzugte Durchführung des Verfahrens ist im folgenden anhand der Zeichnung kurz erläutert. Es zeigt
- Fig.1: zwei im gegenseitigen Abstand angedeutete sogenannte Vorfolien oder Kalanderfolien und
- Fig. 2: diese Vorfolien nach deren Zusammenpressen.

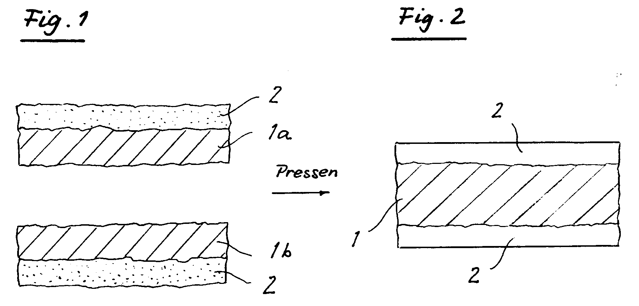

In Fig. 1 der Zeichnung sind zwei beispielsweise aus Weich-PVC bestehende Kalanderfolien 1a und 1b dargestellt, deren Oberflächen - in der Zeichnung übertrieben dargestellt - noch verhältnismäßig rauh sind (Vorfolien). Da an ihnen die letzten Glättvorgänge nicht erforderlich sind, ist die Herstellung dieser Vorfolien 1a, 1b relativ billig. Die Vorfolien 1a und 1b werden auf jeweils einer Seite, und zwar auf den späteren Außenseiten, mit einer transparenten Deckschicht 2 aus einem hochelastischen Material mit selbstheilenden Eigenschaften, zweckmäßigerweise auf Basis PUR, versehen. Nach dem Auftragen und Ablüften der beiden Deckschichten 2 braucht auch deren äußere Oberfläche jeweils keine übertriebene Glätte zu haben.

Nach dem oben erläuterten Zusammenpressen mit den polierten und beheizten Metallplatten liegt eine Verbundfolie vor, wie sie in Fig. 2 dargestellt ist. Die beiden Vorfolien 1a und 1b (Fig. 1) sind zu einer durchgehenden Kernfolie 1 verpreßt worden. Bei dem Preßvorgang wurde gleichzeitig auch jede der beiden äußeren Deckschichten 2 gegen die Kernfolie 1 gepreßt und an ihrer äußeren Oberfläche einwandfrei geglättet. Die erhaltene Mehrschichtfolie weist eine sehr gute optische Qualität auf und ist ferner dank der selbstheilenden Eigenschaften der äußeren Deckschicht 2 sehr kratzfest. Sie ist darüber hinaus auch sehr biegsam, weshalb sich eine derart hergestellte Sichtscheibe für in Cabrio-Verdecke eingenähte Heck-Sichtscheiben besonders gut eignet.

## Patentansprüche

1. Verfahren zum Herstellen einer flexiblen und kratzfesten Sichtscheibe für Cabriolets, bei dem beide Seiten einer Kernfolie (1) aus transparentem, schlag- und reißfestem Kunststoff, insbesondere aus Weich-PVC, mit einer beidseitigen transparenten Deckschicht (2) aus einem hochelastischen Material mit selbstheilenden Eigenschaften, vorzugsweise auf Basis PUR, versehen werden, dadurch gekennzeichnet, daß die Kernfolie (1) aus wenigstens zwei Kalanderfolien (1a und 1b) gebildet wird, die zuvor an den außen liegenden Oberflächen mit je einer der Deckschichten (2) versehen worden sind und dann mittels Pressen zwischen zwei polierten und beheizten Anpreßflächen miteinander verbunden, geglättet und auf Fertigdicke gebracht werden.

2. Verfahren nach Anspruch 1, dadurch gekennzeichnet, daß bei dem Preßvorgang gleichzeitig die thermische Aushärtung der Deckschichten (2) durchgeführt wird.

3. Verfahren nach Anspruch 1 oder 2, dadurch gekennzeichnet, daß als Anpreßflächen zwei ebene Platten verwendet werden.

4. Verfahren nach Anspruch 1, dadurch gekennzeichnet, daß die Deckschichten (2) im Siebdruckverfahren aufgebracht werden.

## Claims

1. A method of producing a flexible, scratch-resistant clear window pane for convertibles, wherein both sides of a core sheet (1) of transparent impact-resistant and non-tearing plastic, especially soft PVC, are provided with a top layer (2), transparent on both sides, of a highly elastic material with self-healing properties, preferably based on PUR, characterised in that the core sheet (1) is made up of at least two calender sheets (1a and 1b) which have previously been provided with a respective cover layer (2) on their outer surfaces and are then bonded together by pressing between two polished, heated surfaces and brought to the final thickness.

2. A method according to claim 1, characterised in that the top layers (2) are thermally hardened simultaneously with the pressing operation.

3. A method according to claim 1 or claim 2, characterised in that the pressure surfaces are two flat plates.

4. A method according to claim 1, characterised in that the top layers (2) are applied by the screen printing process.

## Revendications

1. Procédé de fabrication d'une vitre souple et résistant à l'abrasion pour des cabriolets, selon lequel les deux faces d'une feuille de support (1) en matière plastique transparente, résistant au choc et à la déchirure, notamment en PVC mou, sont revêtues d'une couche de recouvrement (2) transparente en matière très élastique, autocicatrisante, de préférence à base de PUR,
caractérisé en ce que
on réalise la feuille de support (1) à partir d'au moins deux feuilles calandrées (1a, 1b) dont les faces extérieures ont reçu chacune une couche de revêtement (2), puis l'ensemble est pressé entre deux surfaces de pression polies et chauffées, pour être lissé et mis à l'épaisseur finale.

2. Procédé selon la revendication 1,
caractérisé en ce que
pendant l'opération de compression, on effectue en même temps le durcissement thermique des couches de revêtement (2).

3. Procédé selon la revendication 1 ou 2,
caractérisé en ce que
comme surfaces de compression, on utilise deux plaques planes.

4. Procédé selon la revendication 1,
caractérisé en ce qu'
on applique les couches de revêtement (2) par sérigraphie.
